# EUROPÄISCHE PATENTSCHRIFT

(11) **EP 0 983 425 B1**
(45) Veröffentlichungstag und Bekanntmachung des Hinweises auf die Patenterteilung: **23.07.2003**
(21) Anmeldenummer: 98929317.0
(22) Anmeldetag: 14.05.1998
(51) Int. Cl.: F01N 3/28, B01J 35/04

(54) **SYSTEM ZUR VERMEIDUNG MECHANISCHER SCHWINGUNGEN**
SYSTEM FOR AVOIDING MECHANICAL VIBRATIONS
SYSTEME PERMETTANT D'EVITER LES VIBRATIONS MECANIQUES

(30) Priorität: 20.05.1997 DE 29708861 U; 22.07.1997 DE 19731487
(43) Veröffentlichungstag der Anmeldung: 08.03.2000
(73) Patentinhaber: Emitec Gesellschaft für Emissionstechnologie mbH, 53797 Lohmar (DE)
(72) Erfinder: NAGEL, Thomas, D-51766 Engelskirchen (DE)
(74) Vertreter: Kahlhöfer, Hermann, Dipl.-Phys.
(86) Internationale Anmeldenummer: EP9802859
(87) Internationale Veröffentlichungsnummer: WO98053187

(56) Entgegenhaltungen:
- EP-A- 0 658 390
- DE-A- 4 014 214
- DE-A- 4 112 354
- DE-U- 8 905 415
- DE-U- 8 908 269
- US-A- 5 304 351

## Beschreibung

Die Erfindung betrifft ein System umfassend einen Wabenkörper und ein Mantelrohr, wobei der Wabenkörper im Inneren eines Mantelrohres angeordnet und für ein Fluid durchströmbar ist. Der Wabenkörper kann insbesondere als Trägerkörper für ein katalytisch wirksames Material fungieren, das eine Umsetzung schädlicher Komponenten von Abgasen eines Verbrennungsmotors in unschädliche Stoffe ermöglicht.

Aus der DE-U-89 05 415 ist ein als Katalysator-Trägerkörper dienender metallischer Wabenkörper bekannt, der im Innern eines Mantelrohrs angeordnet ist. Das Mantelrohr weist eine umlaufende Ausbördelung auf. Es kann in eine Öffnung einer Wand eingeschoben werden, die geringfügig größer als die Außenmaße des Mantelrohres im nicht ausgebördelten Bereich ist, bis die Ausbördelung an dem Rand der Öffnung anschlägt. In dieser Position kann das Mantelrohr fügetechnisch mit der Wand verbunden werden, so daß eine haltbare Befestigung des Mantelrohres entsteht.

Zur Verlötung eines metallischen Wabenkörpers mit einem Mantelrohr offenbart die DE 42 31 338 A1 ein Belotungsverfahren, bei dem ein klebriges Material und anschließend daran haftendes Lotpulver am Außenumfang des Wabenkörpers aufgebracht wird. Aufgrund des klebrigen Materials bleibt das Lotpulver auch während der nachfolgenden Verfahrensschritte bis zur endgültigen Fertigstellung der Lötverbindung haften. Das Verfahren erlaubt die gezielte Verlötung von Teilbereichen am Außenumfang eines metallischen Wabenkörpers.

Aus der DE-U-89 10 107 ist ein Mantelrohr für einen metallischen Wabenkörper bekannt, das eine Mehrzahl von Außensicken aufweist. Die Außensicken dienen der Versteifung des Mantelrohrs, so daß gegenüber Mantelrohren ohne Versteifungselemente Material eingespart werden kann, indem die Wanddicke reduziert wird. Die Außensicken dienen insbesondere dazu, eine Auswölbung des Mantelrohrs unter Belastung, beispielsweise durch Gasdruck im Inneren des Mantelrohrs, zu verhindern.

Aus der DE-U-89 08 269 ist ein aus Metall hergestellter Trägerkörper zur Aufnahme eines Abgasreinigungskatalysators bekannt. Der Trägerkörper umfasst dabei flache und gewellte Metallbänder, die durch gemeinsames Zusammenrollen einen Mehrschicht-Verbundkörper mit einer großen Oberfläche und einer Waben-Kernstruktur bilden. Zur Ausbildung einer auch unter thermischen und dynamischen Belastungen geeigneten Verbindung zwischen dem Wabenkörper und dem Mantelrohr werden Nuten vorgeschlagen, die in das Metallgehäuse eingebracht sind und zur Aufnahme von Lötmaterial geeignet sind. Dadurch soll eine Verbesserung der Verbindungssteifigkeit zwischen der Innenwand des rohrförmigen Metallgehäuses und der Umfangsfläche der Wabenstruktur erzielt werden.

Die EP 0 245 737 B1 beschreibt einen Wabenkörper, der durch etwa in Umfangsrichtung eines Mantelrohrs verlaufende Schweißnähte im Inneren des Mantelrohrs mit dem Mantelrohr verbunden ist. Durch geeignete Wahl der Schweißparameter kann erreicht werden, daß die Wurzeln der Schweißnähte etwas nach Innen einsinken, so daß zusätzlich eine Formschlußverbindung zwischen dem Mantelrohr und dem Wabenkörper entsteht. Allgemein bekannt ist, daß Schweißnähte insbesondere zu Sprödbruch neigende Schwachstellen in einem Metallgefüge sein können. Es ist daher auf eine geeignete Positionierung von Schweißverbindungen und auf die Auswahl eines geeigneten Schweißverfahrens zu achten.

Aus der DE 41 12 354 A1 ist ein aus mehreren Lagen gewellter Bleche oder glatter und gewellter Bleche bestehender Wabenkörper bekannt, der durch Schweißen mit einem ihn umgebenden Mantelrohr verbunden ist. Um das Verschweißen zu erleichtern und um eine dauerhafte Verbindung des Mantelrohrs und des Wabenkörpers zu erzielen, ist die äußere Schicht des Wabenkörpers aus mehreren einander überlappenden glatten Endabschnitten der gewellten Bleche oder der gewellten und glätten Bleche gebildet, wobei die Endabschnitte etwa gleich lang sind und etwa gleichmäßig über den Außenumfang des Wabenkörpers verteilt sind. Das Mantelrohr und der Wabenkörper sind im Bereich der axialen Enden des Mantelrohrs miteinander verschweißt. In besonderer Ausgestaltung werden der Wabenkörper und das Mantelrohr durch zusätzliche Halterungen, beispielsweise einen Stützring, stirnseitig verstärkt.

Durch unterschiedliche Anregungsmechanismen können mechanische Schwingungen eines Mantelrohres entstehen. Beispielsweise bei einem Mantelrohr, das im Abgassystem eines Verbrennungsmotors angeordnet ist und in dessem Innern sich ein Wabenkörper als Katalysator-Trägerkörper befindet, können transversale Schwingungen des Mantelrohres durch über andere Teile des Abgassystems übertragene Vibrationen des Verbrennungsmotors entstehen. Insbesondere, wenn dabei Resonanzschwingungen angeregt werden, kann eine Verbindung zwischen dem Mantelrohr und dem Wabenkörper beschädigt oder zerstört werden.

Eine weitere mögliche Ursache für die Beschädigung oder Zerstörung der Verbindung sind unterschiedliche thermisch bedingte Änderungen der Abmessungen des Wabenkörpers und des Mantelrohres. Aus diesem Grund wird in der DE 195 07 299 A1 vorgeschlagen, eine Verbindung des Wabenkörpers mit dem Mantelrohr nur in einem Teilbereich der axialen Länge des Mantelrohres herzustellen. Bevorzugtermaßen liegt der Verbindungsbereich etwa in der Mitte der axialen Länge des Mantelrohres.

Aufgabe der vorliegenden Erfindung ist es, ein System mit einen Wabenkörper anzugeben, der im Inneren eines Mantelrohres angeordnet und für ein Fluid durchströmbar ist und der eine dauerhaft haltbare Verbindung zu dem Mantelrohr aufweist. Weiterhin soll der Wabenkörper selbst vor Beschädigungen geschützt werden.

Erfindungsgemäß wird diese Aufgabe durch ein System zur Vermeidung mechanischer Schwingungen gelöst, welches einen Wabenkörper und ein Mantelrohr umfaßt. Das Mantelrohr weist mindestens eine die Schwingungsfestigkeit lokal erhöhende Verstärkungsstruktur auf. Die Verstärkungsstruktur steht dabei um mehr als die Dicke des Mantelrohres aus dessen Außenoberfläche hervor. Das Mantelrohr ist nur in mindestens einem Teilbereich seiner Innenoberfläche über einen Teil des Innenumfangs mit dem Wabenkörper verbunden. Der mindestens eine Teilbereich liegt zumindest im Umgebungsbereich der Verstärkungsstruktur bzw. der Verstärkungsstrukturen, er kann jedoch auch den Bereich unter der Verstärkungsstruktur mit einschließen. Der mindestens eine Teilbereich befindet sich dabei im wesentlichen an Stellen, an welchen ohne Ausbildung des mindestens einen Teilbereichs die größten, insbesondere transversalen, Schwingungsamplituden auftreten. Es existieren somit ein oder mehrere Verbindungen, die jeweils in einem Teilbereich liegen, in dem aufgrund seiner Nähe zu einer oder mehreren Verstärkungsstrukturen höchstens geringe Schwingungsamplituden zu erwarten sind. Auf diese Weise werden sowohl die Verbindungen als auch der Wabenkörper selbst vor übermäßigen mechanischen Beanspruchungen geschützt. Als Ergebnis ist eine größere Haltbarkeit des Wabenkörpers bzw. seiner Verbindungen zu dem Mantelrohr zu erwarten und/oder können die Verbindungen weniger stabil ausgelegt werden. Die Anbindung des Wabenkörpers nur in Teilbereichen der Innenoberfläche des Mantelrohres reduziert insbesondere die Gefahr des Abreißens der Verbindung bzw. der Verbindungen zwischen dem Wabenkörper und dem Mantelrohr.

Insbesondere kann die Fläche am Außenumfang des Wabenkörpers, an der eine Verbindung zu dem Mantelrohr besteht, kleiner als bei vorbekannten Arten der Verbindung zu einem Mantelrohr gewählt werden. Dies hat u. a. zwei Vorteile: Zum einen kann der Aufwand bei der Herstellung der Verbindung, beispielsweise der Materialaufwand, reduziert werden. Zum anderen kann sichergestellt werden, daß der Verbindungsbereich vollständig in der Nähe einer Verstärkungsstruktur liegt.

Bei einer Weiterbildung weist der Wabenkörper eine Mehrzahl von Blechlagen auf, die sich entlang des Durchströmungsweges für das Fluid erstrecken. Mindestens eine der Blechlagen ist am Außenumfang des Wabenkörpers fügetechnisch so mit dem Mantelrohr verbunden, daß insbesondere Zugkräfte aufnehmbar sind. Die Verbindung ist vorzugsweise so ausgeführt, daß auch Druckkräfte aufnehmbar sind, wobei die Zug- als auch die Druckbelastungen, welche aus der thermischen Beaufschlagung resultieren, sowohl in axialer als auch in radialer Richtung auftreten. Der Wabenkörper kann beispielsweise aus strukturierten und glatten Blechlagen aufgebaut sein, die das Mantelrohr spiralig gewickelt, S-förmig ineinander verschlungen oder evolventenförmig innen ausfüllen. Viele bekannte Wabenkörper mit Blechlagen, beispielsweise S-förmig verschlungene, sind in Richtungen quer zum Durchströmungsweg elastisch. Verbindungen der Blechlagen untereinander oder zu einem Mantelrohr reduzieren jedoch die Elastizität. Dadurch, daß die Verbindungen des Wabenkörpers zu dem Mantelrohr in einem schwingungsarmen Bereich liegen, hat die lokale Reduzierung der Elastizität keine oder höchstens geringfügige Auswirkungen auf die Haltbarkeit. Bevorzugtermaßen liegen auch die Verbindungen der Blechlagen untereinander in der Nähe einer Verstärkungsstruktur und/oder in derselben Querschnittsfläche wie eine oder mehrere Verstärkungsstrukturen. Auf diese Weise können auch innere Verbindungen des Wabenkörpers vor mechanischer Beanspruchung geschützt werden.

Bei einer Weiterbildung des Wabenkörpers hat zumindest ein Teil der Blechlagen eine Dicke von weniger als 50 µm, vorzugsweise etwa 30 µm. Wie bereits bekannt ist, kann durch solch dünne Blechlagen der Zeitraum bis zum Einsetzen des katalytischen Prozesses der Abgasumsetzung in einer Kaltstartphase eines Verbrennungsmotors besonders kurz gehalten werden. Die Blechlagen sind jedoch besonders empfindlich gegen mechanische Beanspruchung. Daher kommen die Vorteile des erfindungsgemäßen Systems zur Vermeidung mechanischer Schwingungen hierbei besonders deutlich zum Tragen.

Die mindestens eine Blechlage ist gegebenenfalls über eine Schweißzone mit dem Mantelrohr verbunden. Unter einer Schweißzone wird die Zone verstanden, in der durch einen Schweißvorgang geschmolzenes und wieder erstarrtes Material vorliegt, das eine stoffschlüssige Verbindung zwischen der Blechlage und dem Mantelrohr bildet. Die Schweißzone kann insbesondere eine Schweißnaht sein oder annähernd punktförmig ausgebildet sein. Bei einer bevorzugten Ausfuhrungsform weist die Schweißzone außer dem Material der Blechlage und des Mantelrohres zusätzliches Material auf, um eine möglichst kräftig ausgebildete Schweißnaht bzw. entsprechende Schweißnahtabschnitte zu erhalten. Das zusätzliche Material kann beispielsweise durch Abschmelzen einer Metallelektrode (Metall-Inertgas-Schweißen) zugegeben werden. Das zusätzliche Material bewirkt zu einem wesentlichen Teil die Verstärkung und damit die Erhöhung der Schwingungsfestigkeit des Mantelrohrs.

Die Verstärkungsstruktur ist bevorzugt eine Außensicke des Mantelrohres. Die Verstärkungsstruktur steht dabei um mehr als die Dicke des Mantelrohres aus dessen Außenoberfläche hervor. Die Außensicke wird beispielsweise vor dem Anordnen des Wabenkörpers in dem Mantelrohr durch ein Preßwerkzeug erzeugt. Um die Textur des Materials des Mantelrohres nicht übermäßig zu stören, ist die Außensicke vorzugsweise knickfrei ausgebildet. Zusätzlich zu einer Außensicke weist der Wabenkörper ggf. eine Innensicke auf. Vorzugsweise wird der Wabenkörper an der Innensicke und/oder in der Nähe der Innensicke mit dem Mantelrohr verlötet oder verschweißt.

Bei einer bevorzugten Weiterbildung umläuft die Verstärkungsstruktur den Wabenkörper wendelartig, wobei die Verstärkungsstruktur etwa entlang einer Hauptdurchströmungsrichtung des Fluids voranschreitet. Zur Ausbildung einer besonders bevorzugten Verstärkungsstruktur wird das Mantelrohr zusammen mit dem darin angeordneten Wabenkörper um die Hauptdurchströmungsrichtung gedreht, während parallel zur Hauptdurchströmungsrichtung unter Materialzugabe zumindest abschnittweise eine Schweißnaht gezogen wird, die den Wabenkörper mit dem Mantelrohr verbindet. Durch Abstimmung der Drehgeschwindigkeit und der Lineargeschwindigkeit kann jede gewünschte Ganghöhe der wendelförmigen Schweißnaht eingestellt werden. Insbesondere kann eine Schweißnaht auch eine variierende Ganghöhe haben. Aus Gründen der Stabilität ist es bei manchen Ausführungsformen erwünscht, daß die Windungen der Schweißnaht etwa in der Mitte zwischen den Enden des Mantelrohres dichter liegen als in der Nähe der Enden. Bevorzugt wird, daß die Verstärkungsstruktur den Wabenkörper mindestens zweimal umwindet. Die Verbindung zwischen Mantelrohr und Wabenkörper ist bezüglich des Innenumfangs abschnittweise ausgebildet.

Eine wendelartige Verbindung zwischen dem Mantelrohr und einem Wabenkörper, der eine Mehrzahl sich entlang der Durchströmungsrichtung des Fluids erstreckender Blechlagen aufweist, ist einerseits stabil und führt andererseits zu einer elastischen Anbindung des Wabenkörpers in Richtungen quer zur Hauptdurchströmungsrichtung, da an keiner Stelle bezüglich der Längsachse im wesentlichen 180° einander gegenüberliegende Bereiche am Außenumfang des Wabenkörpers mit der Innenoberfläche des Mantelrohres verbunden sind. Bei Krafteinleitung an einer Verbindungsstelle zwischen dem Mantelrohr und dem Wabenkörper kann so der Wabenkörper unter Ausführung geringfügiger reversibler Torsionsbewegungen und/oder Bewegungen parallel zur Hauptdurchströmungsrichtung lokal ausweichen, wodurch ein Zerstören einer einmal hergestellten Verbindung weitestgehend vermieden wird. Die wendelartige Verbindung ist abschnittweise ausgebildet.

Bei einer anderen bevorzugten Weiterbildung umläuft die Verstärkungsstruktur den Wabenkörper ringartig in sich geschlossen. Derart ausgebildete Verstärkungsstrukturen sind besonders stabil und weisen daher eine besonders hohe Schwingungsfestigkeit auf. Vorzugsweise ist dabei die Verbindung zwischen dem Wabenkörper und dem Mantelrohr in Form von Ringabschnitten ausgebildet.

Gemäß einem weiteren Ausführungsbeispiel der Erfindung ist das Mantelrohr in dem Teilbereich jeweils über höchstens ein Drittel, vorzugsweise ein Sechstel bis ein Viertel seines Innenumfangs mit dem Wabenkörper verbunden. Dadurch wird gewährleistet, daß im übrigen, nicht verbundenen Bereich zwischen Mantelrohr und Wabenkörper eine ausreichende, durch die Wärmebeaufschlagung bedingte unterschiedliche Ausdehnung ermöglicht wird. Somit ist der Längsabschnitt, in welchem das Mantelrohr mit dem Wabenkörper verbunden ist, von den axialen Enden des Mantelrohres beabstandet.

Es ist jedoch gemäß einem weiteren Ausführungsbeispiel der Erfindung möglich, daß sich der Längsabschnitt, in welchem das Mantelrohr mit dem Wabenkörper verbunden ist, im wesentlichen über die gesamte Länge des Mantelrohres erstreckt.

Vorzugsweise ist der Wabenkörper so aufgebaut, daß eine Mehrzahl mindestens teilweise strukturierter Blechlagen, welche die Wände einer Vielzahl von Kanälen bilden, welche von dem Fluid durchströmt werden können, nur in Teilzonen untereinander verbunden, vorzugsweise verlötet sind.

Bei noch einer Weiterbildung mit einem Wabenkörper, der im wesentlichen parallel zu einer Längsachse für das Fluid durchströmbar ist, ist die Verstärkungsstruktur bzw. eine der Verstärkungsstrukturen etwa in der Mitte der axialen Länge des Mantelrohres angeordnet. Diese Anordnung bewirkt für das gesamte Mantelrohr eine Erhöhung der Schwingungsfestigkeit, da die für transversale Schwingungen anfälligen Abschnitte des Mantelrohres optimal verkürzt werden.

Bei noch einer weiteren Weiterbildung mit einem Wabenkörper, der im wesentlichen parallel zu einer Längsachse für das Fluid durchströmbar ist, weist das Mantelrohr eine Mehrzahl der Verstärkungsstrukturen auf, die jeweils etwa in Umfangsrichtung verlaufen und das Mantelrohr in ungefähr gleich lange Abschnitte aufgliedern. Auch bei dieser Weiterbildung werden die Längen durchgehender schwingungsanfälliger Bereiche optimal verkürzt.

Gemäß noch einem weiteren bevorzugten Ausführungsbeispiel der Erfindung ist das Mantelrohr in den jeweiligen Teilbereichen mit dem Wabenkörper so verbunden, daß an keiner Stelle einer beliebigen Ebene senkrecht zur Längsachse Verbindungsbereiche angeordnet sind, welche bezüglich der Längsachse im wesentlichen 180° einander gegenüberliegen. Das bedeutet, wenn an einer Stelle der Innenoberfläche des Mantelrohres der Wabenkörper mit diesem in einem oder mehreren einzelnen jeweiligen Teilbereichen verbunden ist, so befindet sich in einer gedachten Ebene senkrecht zur Längsachse bzw. Durchströmrichtung des Wabenkörpers und durch den bzw. die Teilbereiche im wesentlichen dazu 180° gegenüberliegend kein weiterer Teilbereich mit einer Verbindung zwischen Mantelrohr und Wabenkörper. Bestimmten Verbindungsbereichen liegen somit keine Verbindungsbereiche gegenüber, sondern diese gegenüberliegenden Verbindungsbereiche sind in einer Ebene angeordnet, welche bezüglich der Längsachse des Wabenkörpers um eine definierte Länge bzw. um einen definierten Abstand von der Ebene entfernt ist, in welcher die zuerst betrachteten Verbindungsbereiche bzw. Teilbereiche angeordnet sind.

Gemäß einem weiteren Ausführungsbeispiel ist der Teilbereich bzw. jeder Teilbereich bezüglich der Längsachse asymmetrisch angeordnet. Es können auch mehrere Teilbereiche der Innenoberfläche des Mantelrohres mit dem Wabenkörper verbunden sein; solange sie asymmetrisch angeordnet sind. Unter asymmetrischer Anordnung soll verstanden werden, daß an keiner Stelle einer beliebigen Ebene senkrecht zur Längsachse Verbindungsbereiche angeordnet sind, welche bezüglich der Längsachse im wesentlichen 180° einander gegenüberliegen. Bezogen auf den Innenumfang der Innenoberfläche des Mantelrohres bedeutet dies, daß der Verbindungsbereich kleiner ist als 180°, wobei der Verbindungsbereich als ein einzelner Verbindungsbereich ausgebildet ist und sich über den besagten Umfangswinkelbereich < 180° oder in mehreren separaten Verbindungsabschnitten darüber erstreckt. Solange der Winkel, über welchen sich der Verbindungsbereich in dem jeweiligen Teilbereich am Innenumfang des Mantelrohres erstreckt, kleiner als 180° ist, existiert in einer definierten beliebigen Ebene senkrecht zur Längsachse kein Verbindungsbereich, welcher 180° gegenüberliegend zu sich ebenfalls einen Verbindungsbereich aufweist. Durch diese asymmetrische Anordnung des Teilbereiches, in welchem die Verbindung zwischen Mantelrohr und Wabenkörper hergestellt ist, ist einerseits eine ausreichende Verbindungsfestigkeit zwischen Mantelrohr und Wabenkörper hergestellt, solange diese Verbindung sich im wesentlichen an den Stellen befindet, an welchen ansonsten die größten Schwingungsamplituden auftreten, und weist andererseits der Katalysator-Trägerkörper außerdem eine ausreichend hohe Flexibilität auf, um thermische Belastungen, insbesondere infolge von Temperaturunterschieden, aufnehmen zu können.

Gemäß einem weiteren Ausführungsbeispiel ist das Mantelrohr in dem Teilbereich mit dem Wabenkörper so verbunden, daß bezüglich der Längsachse einander gegenüberliegende Verbindungsbereiche existieren, welche in unterschiedlichen, senkrecht zur Längsachse liegenden Ebenen angeordnet sind. Es ist somit möglich, daß sich diese Verbindungsbereiche im wesentlichen 180°, bezogen auf den Umfang der Innenoberfläche des Mantelrohres, gegenüberliegen, ohne in den gedachten, senkrecht zur Längsachse angeordneten Ebenen zu liegen.

Ergänzende Erläuterungen zum technischen Hintergrund der Erfindung sowie weitere Vorteile, Merkmale und Anwendungsmöglichkeiten der Erfindung werden nun unter Bezugnahme auf die Zeichnung detailliert beschrieben. Die einzelnen Figuren der Zeichnung zeigen:
- Fig. 1: einen Wabenkörper im Inneren eines Mantelrohrs mit drei umlaufenden Außensicken,
- Fig. 2: einen durch eine wendelartige Schweißnaht im Inneren eines Mantelrohres befestigten Wabenkörper und
- Fig. 3: eine schematische Ansicht eines Wabenkörpers in einem Mantelrohr mit einer mittig umlaufenden Außensicke.

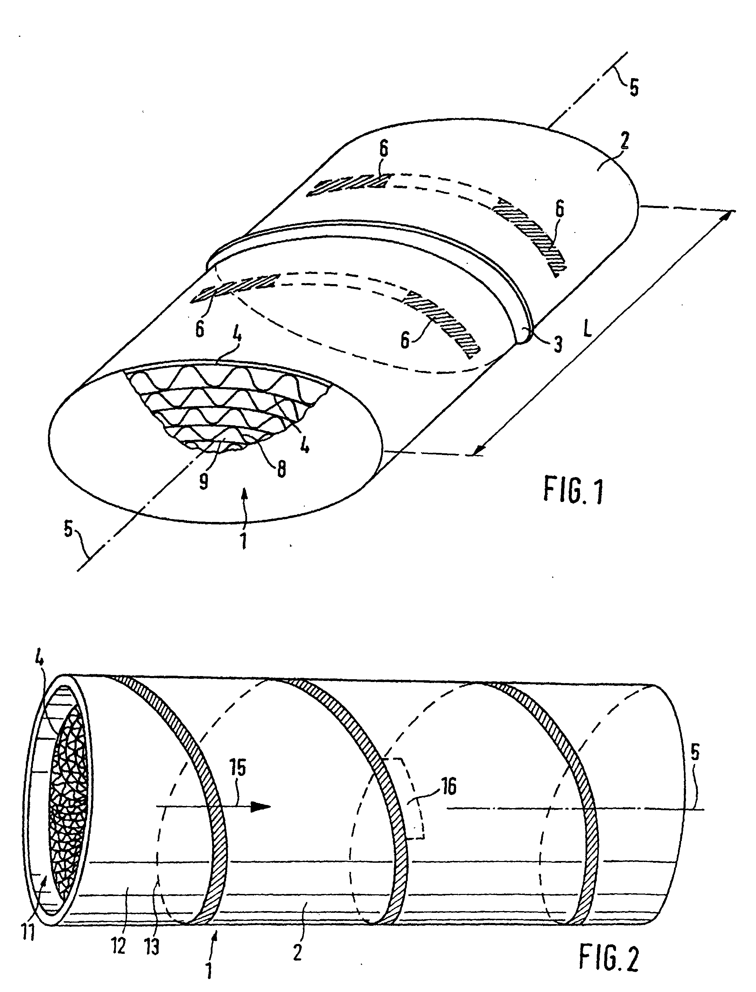

Der in Fig. 1 gezeigte metallische Wabenkörper 1 ist im Inneren des Mantelrohres 2 angeordnet. Der Wabenkörper 1 weist eine Vielzahl durch glatte 4 und gewellte 8 Blechlagen gebildete Kanäle 9 auf, die etwa parallel zur Längsachse 5 von einem Fluid durchströmbar sind. Das Mantelrohr 2 ist im Querschnitt im wesentlichen elliptisch geformt. Weitere, nicht gezeigte Mantelrohre, die zur Ausführung der Erfindung geeignet sind, haben beliebige Querschnittsformen, beispielsweise ovale.

Das Mantelrohr 2 weist insgesamt drei ringartig in sich geschlossen umlaufende Verstärkungsstrukturen auf, die als Außensicken 3 ausgebildet sind. Die Außensicken 3 sind im wesentlichen parallel zueinander angeordnet und gliedern das Mantelrohr 2 in vier etwa gleichlange Abschnitte auf, die somit jeweils ungefähr ein Viertel der Länge L des Mantelrohres 2 besitzen.

In vier Teilbereichen 6 des Innenumfangs des Mantelrohres 2 sind der Wabenkörper 1 und das Mantelrohr 2 miteinander verlötet. Die Teilbereiche 6 erstrecken sich jeweils in Umfangsrichtung entlang der Ränder von zwei der drei Außensicken 3 über nur einen Teil des Innenumfangs. Die Teilbereiche 6 liegen vollständig im Umgebungsbereich der jeweiligen benachbarten Außensicke 3. Jeder Teilbereich erstreckt sich etwa über ein Drittel des Innenumfangs und ist zwischen 1 und 2 cm breit.

Anstelle des gezeigten Wabenkörpers 1 lassen sich in entsprechender Weise insbesondere auch Wabenkörper mit S-förmig ineinander verschlungenen glatten und gewellten Blechlagen 4, 8 und Wabenkörper mit im Querschnitt evolventenförmig verlaufenden Blechlagen 4, 8 an einem Mantelrohr befestigen.

Bei der in Fig. 2 gezeigten Ausführungsform sind der metallische Wabenkörper 11 und das im Querschnitt kreisförmige Mantelrohr 12 über eine wendelartig umlaufende Schweißnaht 13 miteinander verbunden. Die Schweißnaht 13 ist eine unter Materialzugabe nach dem Metall-Inertgas-Schweißverfahren hergestellte, die Wand des Mantelrohres 12 durchdringende Schweißnaht. Aus Fig. 2 ist erkennbar, daß die Schweißnaht 13 am Außenumfang des Mantelrohres 12 über ihre gesamte Erstreckung eine Auswölbung aufweist. Die Auswölbung ist massiv und bewirkt eine Verstärkung des Mantelrohres 12, die im Bereich der Schweißnaht 13 zu einer erhöhten Schwingungsfestigkeit führt.

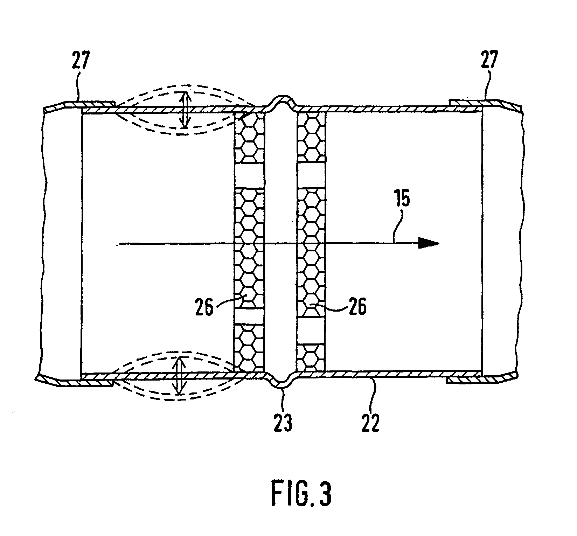

Anhand der schematischen Darstellung von Fig. 3 wird beispielhaft eine Möglichkeit der Anregung transversaler Schwingungen eines Mantelrohres beschrieben. Das Mantelrohr 22 weist in seiner Mitte eine in sich geschlossen umlaufende Außensicke 23 auf. An den Rändern der Außensicke 23 ist in zwei, abschnittweise ausgebildeten Teilbereichen 26 des Innenumfangs des Mantelrohres 22 ein Wabenkörper mit dem Mantelrohr 22 verlötet. Das Mantelrohr 22 ist an seinen Enden jeweils mit einem Anschlußrohrstück 27 verbunden. Eines der Anschlußrohrstücke 27 führt zu einem Abgasauslaß eines nicht dargestellten Verbrennungsmotors. Vibrationen des Verbrennungsmotors werden über das Anschlußrohrstück 27 auf das Mantelrohr 22 übertragen. Bei bestimmten Werten der Drehzahl des Verbrennungsmotors werden Resonanzschwingungen des Mantelrohres 22 angeregt, wie in der linken Figurenhälfte oben und unten jeweils durch einen Doppelpfeil angedeutet ist. Dabei bewegen sich einander gegenüberliegende Bereiche des Mantelrohrs 22 in entgegengesetzte Richtungen. Aufgrund der Außensicke 23 schwingt nur der Teilbereich des Mantelrohres zwischen der Außensicke 23 und dem Anscblußrohrstück 27. Die Amplitude der Schwingungen ist wegen der besseren Erkennbarkeit übertrieben groß dargestellt. Es ist erkennbar, daß selbst bei der dargestellten Größe der Schwingungsamplituden das Teilstück des Mantelrohres 22 an dem linken Teilbereich 26 nicht wesentlich von den Schwingungen betroffen ist. In jedem Fall ist die parallel zur Hauptdurchströmungsrichtung 15 gemessene Breite der Teilbereiche 26 auf die zu erwartenden Schwingungen und damit auf die Länge des schwingfähigen Abschnitts des Mantelrohres 22 abzustimmen. Befände sich in dem schwingfähigen Abschnitt eine weitere Verstärkungsstruktur, so könnte wegen der geringeren Größe der zu erwartenden Schwingungsamplituden der linke Teilbereich 26 breiter sein als in Fig. 3 gezeigt.

Das erfindungsgemäße System zur Vermeidung mechanischer Schwingungen führt zu einer dauerhaft haltbaren Verbindung zwischen einem Wabenkörper und einem Mantelrohr, in dessem Innern der Wabenkörper angeordnet ist, sowie zu einer Verringerung der mechanischen Belastungen auf den Wabenkörper.

### Bezugszeichenliste:

- 1; 11: metallischer Wabenkörper
- 2; 12; 22: Mantelrohr
- 3; 23: umlaufende Außensicke
- 4: glatte Blechlage
- 5: Längsachse
- 6; 26; 16: Teilbereich
- 8: gewellte Blechlage
- 9: Kanal
- 13: wendelartige Schweißnaht
- 15: Hauptdurchströmungsrichtung
- 27: Anschlußrohrstück

## Patentansprüche

1. System zur Vermeidung mechanischer Schwingungen umfassend einen Wabenkörper (1; 11) und ein Mantelrohr (2; 12; 22), wobei der Wabenkörper (1; 11) im Innern des Mantelrohres (2; 12; 22) angeordnet und für ein Fluid durchströmbar ist, wobei das Mantelrohr (2; 12; 22) mindestens eine die Schwingungsfestigkeit lokal erhöhende Verstärkungsstruktur (3; 23) aufweist und nur in mindestens einem Teilbereich (6; 16; 26) seiner Innenoberfläche mit dem Wabenkörper (1; 11) verbunden ist, wobei der mindestens eine Teilbereich (6; 16; 26) in der Nähe der mindestens einen Verstärkungsstruktur (3; 23) angeordnet ist und/oder sich unter diese erstreckt, und sich der mindestens eine Teilbereich (6; 16; 26) nur über einen Teil des Innenumfangs des Mantelrohres (2; 12; 22) ausdehnt, **dadurch gekennzeichnet, dass** der mindestens eine Teilbereich (6; 16; 26) sich im wesentlichen an Stellen befindet, an welchen ohne Ausbildung des mindestens einen Teilbereichs (6; 16; 26) die größten, insbesondere transversalen, Schwingungsamplituden auftreten und dass die mindestens eine Verstärkungsstrukmr (3; 23) um mehr als die Dicke des Mantelrohres (2; 12; 22) aus dessen Außenoberfläche hervorsteht.

2. System nach Anspruch 1, **dadurch gekennzeichnet, daß** der Wabenkörper (1; 11) eine Mehrzahl von Blechlagen (4; 8) aufweist, die sich im wesentlichen entlang des Durchströmungsweges erstrecken, und daß mindestens eine (4) der Blechlagen (4; 8) am Außenumfang des Wabenkörpers (1; 11) mit dem Mantelrohr (2; 12; 22) zumindest auf Zug belastbar verbunden ist.

3. System nach Anspruch 2, **dadurch gekennzeichnet, daß** zumindest ein Teil der Blechlagen (4; 8) eine Dicke von weniger als 50 µm, vorzugsweise etwa 30 µm, hat.

4. System nach Anspruch 2 oder 3, **dadurch gekennzeichnet, daß** die mindestens eine Blechlage (4) über eine Schweißzone (13) mit dem Mantelrohr (12) verbunden ist.

5. System nach Anspruch 4, **dadurch gekennzeichnet, daß** die Schweißzone außer dem Material der Blechlage (4) und des Mantelrohres (12) zusätzliches Material aufweist.

6. System nach einem der Ansprüche 1 bis 5, **dadurch gekennzeichnet, daß** die Verstärkungsstruktur (3; 23) eine Außensicke des Mantelrohres (2; 22) ist.

7. System nach einem der Ansprüche 1 bis 6, **dadurch gekennzeichnet, daß** die Verstärkungsstruktur (13) den Wabenkörper (11) wendelartig umläuft, wobei die Verstärkungsstruktur (13) etwa entlang einer Hauptdurchströmungsrichtung (15) des Fluids voranschreitet.

8. System nach Anspruch 7, **dadurch gekennzeichnet, daß** die Verstärkungsstruktur (13) den Wabenkörper (11) mindestens zweimal umwindet.

9. System nach Anspruch 7 oder 8, **dadurch gekennzeichnet, daß** der Teilbereich (16) wendelartige Abschnitte aufweist.

10. System nach einem der Ansprüche 1 bis 6, **dadurch gekennzeichnet, daß** die Verstärkungsstruktur (3; 23) den Wabenkörper (1) ringartig in sich geschlossen umläuft.

11. System nach Anspruch 10, **dadurch gekennzeichnet, daß** der Teilbereich (6; 26) Ringabschnitte aufweist.

12. System nach einem der Ansprüche 1 bis 11, **dadurch gekennzeichnet, daß** das Mantelrohr (2; 12; 22) in dem Teilbereich (6; 16; 26) jeweils über höchstens ein Drittel, vorzugsweise ein Sechstel bis ein Viertel seines Innenumfangs mit dem Wabenkörper (1; 11) verbunden ist.

13. System nach Anspruch 12, **dadurch gekennzeichnet, daß** der Teilbereich (6; 16; 26) von den axialen Enden des Mantelrohres (2; 12; 22) beabstandet ist.

14. System nach Anspruch 12, **dadurch gekennzeichnet, daß** der Teilbereich (6; 16; 26) sich über im wesentlichen die gesamte Länge des Mantelrohres (2; 12; 22) erstreckt.

15. System nach einem der Ansprüche 1 bis 14, **dadurch gekennzeichnet, daß** der Wabenkörper (1; 11) eine Mehrzahl mindestens teilweise strukturierter Blechlagen (4; 8) aufweist, welche die Wände einer Vielzahl von von dem Fluid durchströmbaren Kanälen (9) bilden und nur in Teilzonen untereinander verlötet sind.

16. System nach einem der Ansprüche 1 bis 15, das im wesentlichen parallel zu einer Längsachse (5) für das Fluid durchströmbar ist, **dadurch gekennzeichnet, daß** die Verstärkungsstruktur (3; 23) etwa in der Mitte der axialen Länge (L) des Mantelrohres (2; 22) augeordnet ist.

17. System nach einem der Ansprüche 1 bis 15, das im wesentlichen parallel zu einer Längsachse (5) für das Fluid durchströmbar ist, **dadurch gekennzeichnet, daß** das Mantelrohr (2) eine Mehrzahl der Verstärkungsstrukturen (3) aufweist, die jeweils etwa in Umfangsrichtung verlaufen und das Mantelrohr (2) in ungefähr gleich lange Abschnitte aufgliedern.

18. System nach Anspruch 16 oder 17, **dadurch gekennzeichnet, daß** das Mantelrohr (2; 12; 22) in den jeweiligen Teilbereichen mit dem wabenkörper (1; 11) so verbunden ist, daß an keiner Stelle einer beliebigen Ebene senkrecht zur Längsachse (5) Verbindungsbereiche angeordnet sind, welche bezüglich der Längsachse (5) im wesentlichen 180° einander gegenüberliegen.

19. System nach Anspruch 16 und 17, **dadurch gekennzeichnet, daß** der Teilbereich (6; 16; 26) bezüglich der Längsachse (5) asymmetrisch angeordnet ist.

20. System nach Anspruch 16 und 17, **dadurch gekennzeichnet, daß** das Mantelrohr (2; 12; 22) in dem Teilbereich (6; 16; 26) mit dem Wabenkörper (1; 11) so verbunden ist, daß bezüglich der Längsachse (5) einander gegenüberliegende Verbindungsbereiche in unterschiedlichen, senkrecht zur Längsachse (5) liegenden Ebenen angeordnet sind.

## Claims

1. A system for preventing mechanical vibration comprising a honeycomb body (1; 11) and a jacket tube (2; 12; 22), wherein the honeycomb body (1; 11) is arranged in the interior of the jacket tube (2; 12; 22) and can be flown through by a fluid, wherein the jacket tube (2; 12; 22) has at least one reinforcing structure (3; 23) locally increasing the vibration resistance, said jacket tube (2; 12; 22) being connected to the honeycomb body (1; 11) only in at least one partial region (6; 16; 26) of its inside surface; wherein the at least one partial region (6; 16; 26) is arranged near the at least one reinforcing structure (3; 23) and/or is extending under said reinforcing structure (3; 23), and the at least one partial region (6; 16; 26) is extending only over a part of the inner circumference of the jacket tube (2; 12; 22), **characterised in that** the at least one partial region (6; 16; 26) is located essentially at locations, at which the largest vibration amplitudes, especially transversal vibration amplitudes, occur without the formation of the at least one partial region (6; 16; 26) and that the at least one reinforcing structure (3; 23) protrudes by more than the thickness of the jacket tube (2; 12; 22) out of the outer surface of said jacket tube (2; 12; 22).

2. System according to claim 1 **characterised in that** the honeycomb body (1; 11) has a plurality of sheet layers (4; 8) which extend substantially along the flow-through path, and that at least one (4) of the sheet layers (4; 8) at the outer periphery of the honeycomb body (1; 11) is connected to the jacket tube (2; 12; 22) loadably at least in respect of tensile force.

3. System according to claim 2, **characterised in that** at least a part of the sheet layers (4; 8) is of a thickness of less than 50 µm, preferably about 30 µm.

4. System according to claim 2 or 3, **characterised in that** the at least one sheet layer (4) is connected to the jacket tube (12) by way of a weld zone (13).

5. System according to claim 4, **characterised in that** the weld zone has additional material besides the material of the sheet layer (4) and the jacket tube (12).

6. System according to one of claims 1 to 5, **characterised in that** the reinforcing structure (3; 23) is an external corrugation of the jacket tube (2; 22).

7. System according to one of claims 1 to 6, **characterised in that** the reinforcing structure (13) extends helically around the honeycomb body (11), wherein the reinforcing structure (13) progresses approximately along a main throughflow direction (15) of the fluid.

8. System according to claim 7, **characterised in that** the reinforcing structure (13) enwinds the honeycomb body (11) at least twice.

9. System according to claim 7 or 8, **characterised in that** the partial region (16) has helical portions.

10. System according to one of claims 1 to 6, **characterised in that** the reinforcing structure (3; 23) extends ring-like in a configuration which is closed in itself around the honeycomb body (1).

11. System according to claim 10, **characterised in that** the partial region (6; 26) has ring portions.

12. System according to one of claims 1 to 11, **characterised in that** the jacket tube (2; 12; 22) is connected to the honeycomb body (1; 11) in the partial region (6; 16; 26) respectively over at most one third, preferably one sixth to one quarter of its inner circumference.

13. System according to claim 12, **characterised in that** the partial region (6; 16; 26) is spaced from the axial ends of the jacket tube (2; 12; 22).

14. System according to claim 12, **characterised in that** the partial region (6; 16; 26) extends over substantially the entire length of the jacket tube (2; 12; 22).

15. System according to one of claims 1 to 14, **characterised in that** the honeycomb body (1; 11) has a plurality of at least partially structured sheet layers (4; 8) which form the walls of a plurality of passages (9) through which the fluid can flow, the sheet layers being brazed together only in partial zones.

16. System according to one of claims 1 to 15 through which the fluid can flow substantially parallel to a longitudinal axis (5), **characterised in that** the reinforcing structure (3; 23) is arranged approximately at the centre of the axial length (L) of the jacket tube (2; 22).

17. System according to one of claims 1 to 15 through which the fluid can flow substantially parallel to a longitudinal axis (5), **characterised in that** the jacket tube (2) has a plurality of reinforcing structures (3) which each extend substantially in the peripheral direction and divide the jacket tube (2) into portions of approximately equal length.

18. System according to claim 16 or 17, **characterised in that** the jacket tube (2; 12; 22) is connected to the honeycomb body (1; 11) in the respective partial regions in such a way that at no location in any plane perpendicularly to the longitudinal axis (5) connecting regions are arranged which are in substantially 180° mutually oppositely disposed relationship with respect to the longitudinal axis (5).

19. System according to claim 16 and 17, **characterised in that** the partial region (6; 16; 26) is arranged asymmetrically with respect to the longitudinal axis (5).

20. System according to claim 16 and 17, **characterised in that** the jacket tube (2; 12; 22) is connected to the honeycomb body (1; 11) in the partial region (6; 16; 26) in such a way, that connecting regions which are in mutually oppositely disposed relationship with respect to the longitudinal axis (5), are arranged in different planes which are perpendicular to the longitudinal axis (5).

## Revendications

1. Système pour éviter des vibrations mécaniques, comportant un corps en nids d'abeilles (1; 11) et un tube d'enveloppe (2; 12; 22), dans quel cas le corps en nids d'abeilles (1; 11) est agencé à l'intérieur du tube d'enveloppe (2; 12; 22) et peut être parcouru par un fluide, dans quel cas le tube d'enveloppe (2; 12; 22) présente au moins une structure de renforcement (3; 23) augmentant localement la résistance aux vibrations et n'est qu'au moins dans une région partielle (6; 16; 26) de sa surface intérieure relié au corps en nids d'abeilles (1; 11), dans quel cas l'au moins une région partielle (6; 16; 26) est agencée à proximité de l'au moins une structure de renforcement (3 ; 23) et/ou s'étend en dessous de celle-ci, et l'au moins une région partielle (6; 16; 26) ne s'étend que sur une partie de la périphérie intérieure du tube d'enveloppe (2; 12; 22), **caractérisé en ce que** l'au moins une région partielle (6; 16; 26) se trouve essentiellement à des endroits où sans réalisation de l'au moins une région partielle (6; 16; 26) se produisent les plus grandes amplitudes des vibrations qui sont notamment transversales et **en ce que** l'au moins une structure de renforcement (3 ; 23) fait saillie hors de la surface extérieure du tube d'enveloppe (2; 12 ; 22) de plus de l'épaisseur de celui-ci.

2. Système selon la revendication 1, **caractérisé en ce que** le corps en nids d'abeilles (1; 11) présente une pluralité de couches de tôles (4; 8) qui s'étendent sensiblement le long du trajet d'écoulement et **en ce qu'**au moins une (4) des couches de tôles (4; 8) à la périphérie extérieure est reliée au tube d'enveloppe (2; 12 ; 22) de manière à pouvoir être au moins chargé de traction.

3. Système selon la revendication 2, **caractérisé en ce qu'**au moins une partie des couches de tôles (4; 8) a une épaisseur de moins de 50 µm, de préférence d'environ 30 µm.

4. Système selon la revendication 2 ou 3, **caractérisé en ce que** l'au moins une couche de tôle (4) est reliée au tube d'enveloppe (12) par une zone de soudure (13).

5. Système selon la revendication 4, **caractérisé en ce que** la zone de soudure (13) présente outre le matériau de la couche de tôle (4) et du tube d'enveloppe (12) du matériau supplémentaire.

6. Système selon l'une des revendications 1 à 5, **caractérisé en ce que** la structure de renforcement (3; 23) est une moulure extérieure du tube d'enveloppe (2 ; 22).

7. Système selon l'une des revendications 1 à 6, **caractérisé en ce que** la structure de renforcement (13) s'étend à la façon d'une hélice autour du corps en nids d'abeilles (11), la structure de renforcement (13) avançant environ le long d'un sens d'écoulement principal (15) du fluide.

8. Système selon la revendication 7, **caractérisé en ce que** la structure de renforcement (13) enlace au moins deux fois le corps en nids d'abeilles (11).

9. Système selon la revendication 7 ou 8, **caractérisé en ce que** la région partielle (16) a des sections à la façon d'hélices.

10. Système selon l'une des revendications 1 à 6, **caractérisé en ce que** la structure de renforcement (3 ; 23) enlace le corps en nids d'abeilles (1) de manière annulaire fermée en soi.

11. Système selon la revendication 10, **caractérisé en ce que** la région partielle (6 ; 26) présente des sections annulaires.

12. Système selon l'une des revendications 1 à 11, **caractérisé en ce que** le tube d'enveloppe (2; 12; 22) est relié au corps en nids d'abeilles (1; 11) dans la région partielle (6; 16; 26) respectivement sur un tiers au maximum, de préférence sur un sixième jusqu'à un quart de sa périphérie intérieure.

13. Système selon la revendication 12, **caractérisé en ce que** la région partielle (6; 16; 26) est à distance des extrémités axiales du tube d'enveloppe (2; 12 ; 22).

14. Système selon la revendication 12, **caractérisé en ce que** la région partielle (6; 16; 26) s'étend sur sensiblement la longueur totale du tube d'enveloppe (2; 12 ; 22).

15. Système selon l'une des revendications 1 à 14, **caractérisé en ce que** le corps en nids d'abeilles (1; 11) présente une pluralité de couches de tôles au moins partiellement structurées (4; 8) qui forment les parois d'une multiplicité de canaux (9) pouvant être parcourus par le fluide et qui ne sont brasées entre-elles que dans des zones partielles.

16. Système selon l'une des revendications 1 à 15 qui peut être parcouru par le fluide sensiblement de manière parallèle à un axe longitudinal(5),
**caractérisé en ce que** la structure de renforcement(3 ; 23) est agencée environ au milieu de la longueur axiale (L) du tube d'enveloppe (2 ; 22).

17. Système selon l'une des revendications 1 à 15, qui peut être parcouru par le fluide sensiblement de manière parallèle à un axe longitudinal (5), **caractérisé en ce que** le tube d'enveloppe (2) présente une pluralité des structures de renforcement (3) qui s'étendent respectivement environ en direction périphérique et qui subdivisent le tube d'enveloppe (2) en des sections qui ont environ la même longueur.

18. Système selon la revendication 16 ou 17, **caractérisé en ce que** le tube d'enveloppe (2; 12; 22) est relié au corps en nids d'abeilles (1; 11) de telle façon dans les régions partielles respectives qu'à aucun endroit d'un plan quelconque perpendiculaire à l'axe longitudinal (5) des régions de liaison sont agencées qui par rapport à l'axe longitudinal (5) sont situées en vis-à-vis avec sensiblement 180°.

19. Système selon la revendication 16 et 17, **caractérisé en ce que** la région partielle (6 ; 16; 26) est agencée de manière asymétrique par rapport à l'axe longitudinal (5).

20. Système selon la revendication 16 ou 17, **caractérisé en ce que** le tube d'enveloppe (2; 12; 22) est relié dans la région partielle (6; 16; 26) de telle manière au corps en nids d'abeilles (1; 11) que des régions de liaison se trouvant en vis-à-vis par rapport à l'axe longitudinal (5) sont agencées dans des plans différents, perpendiculaires à l'axe longitudinal (5).
